# FASCICULE DE BREVET EUROPEEN

(11) **EP 1 043 375 B1**
(45) Date de publication et mention de la délivrance du brevet: **24.05.2006**
(21) Numéro de dépôt: 00400856.1
(22) Date de dépôt: 29.03.2000
(51) Int. Cl.: C09J 151/06, C09J 123/16, C08L 51/06, B32B 7/12

(54) **Liant de coextrusion, son utilisation pour une structure multicouche et la structure ainsi obtenue**
Koextrusionbindung, seine Verwendung für eine Multischichtstruktur und die Struktur hergestellt davon
Coextrusion binder adhesive, its utilisation for a multilayer structure and the structure obtained therefrom

(30) Priorité: 06.04.1999 FR 9904262
(43) Date de publication de la demande: 11.10.2000
(73) Titulaire: Arkema, 92800 Puteaux (FR)
(72) Inventeur: Le Roy, Christophe, 27000 Evreux (FR); Pascal, Jérôme, 27800 Saint Cyr de Salerne (FR); Marical, Xavier, 27410 Beaumesnil (FR)
(74) Mandataire: Neel, Henry

(56) Documents cités:
- EP-A- 0 035 392
- EP-A- 0 742 236
- EP-A- 0 816 460
- US-A- 4 460 632
- US-A- 4 460 745
- US-A- 4 487 885

## Description

La présente invention concerne un liant de coextrusion, son utilisation pour faire une structure multicouche et la structure ainsi obtenue.

Plus précisément le liant de coextrusion de la présente invention comprend :
- 5 à 30 parties d'un polymère (A) lui-même comprenant un mélange d'un polyéthylène (A1) de densité comprise entre 0,935 et 0,980 et d'un polymère (A2) choisi parmi les élastomères, les polyéthylènes de très basse densité et les copolymères de l'éthylène, le mélange (A1) + (A2) étant cogreffé par un acide carboxylique insaturé,
- 95 à 70 parties d'un polyéthylène (B) de densité comprise entre 0,930 et 0,950,
- le mélange de (A) et (B) étant tel que :
   · sa densité est comprise entre 0,930 et 0,950,
   · la teneur en acide carboxylique insaturé greffé est comprise entre 30 et 10000 ppm,
   · le MFI (indice d'écoulement à l'état fondu) mesuré selon ASTM D 1238 à 190°C - 21,6 kg est compris entre 5 et 100.

La présente invention concerne aussi une structure multicouche comprenant une couche comprenant le liant de coextrusion défini ci-dessus, et directement attachée à celle-ci une couche (E) de résine polaire azotée ou oxygénée telle qu'une couche d'une résine polyamide, d'une polycétone aliphatique, d'un copolymère saponifié d'éthylène et d'acétate de vinyle (EVOH) ou d'une résine polyester, ou bien une couche métallique.

L'invention concerne aussi une structure comprenant la structure précédente et directement attachée à celle-ci, du côté du liant, soit une couche (F) de polyoléfine, soit une couche d'une résine choisie parmi les résines de la couche (E) soit encore une couche métallique.

L'invention concerne aussi une structure comprenant respectivement une couche de polyoléfine (F), une couche du liant défini ci-dessus, une couche d'une résine polyamide ou d'un copolymère saponifié d'éthylène et d'acétate de vinyle (EVOH), une couche du liant défini ci-dessus et une couche de polyoléfine (F).

Ces structures sont utiles pour fabriquer des emballages souples ou rigides tels que des sachets, des bouteilles ou des containers. On peut fabriquer ces emballages par coextrusion, laminage, coextrusion soufflage.

L'invention est utile en particulier pour les tuyaux coextrudés et pour les réservoirs d'essence des automobiles.

Les réservoirs d'essence sont constitués le plus souvent de cinq couches qui sont respectivement :
- du polyéthylène haute densité (PEHD) ;
- un liant ;
- un polyamide (PA) ou un copolymère ayant des motifs éthylène et des motifs alcool vinylique (EVOH) ;
- un liant ;
- du PEHD.

Très souvent, on ajoute une sixième couche entre l'une des couches de liant et l'une des couches de PEHD. Cette sixième couche est constituée des chutes de fabrication consécutives au moulage des réservoirs, de réservoirs non conformes pour une beaucoup plus petite quantité. Ces chutes et réservoirs non conformes sont broyés jusqu'à obtenir des granulés. Ce broyat est ensuite refondu et extrudé directement sur l'installation de coextrusion des réservoirs. Ce broyat pourrait être aussi fondu et regranulé par une machine d'extrusion telle qu'une bi-vis avant d'être réutilisé.

Selon une variante, le produit recyclé peut être mélangé au PEHD des deux couches extrêmes du réservoir. On peut par exemple mélanger les granulés de produit recyclé aux granulés de PEHD vierge de ces deux couches. On peut aussi utiliser toute combinaison de ces recyclages.

Le taux de matière recyclée peut représenter jusqu'à 50 % du poids total du réservoir.

Cette sixième couche comporte donc l'ensemble des matériaux de la structure multicouches, PEHD, liants, PA ou EVOH.

L'art antérieur a déjà décrit des réservoirs d'essence multicouches. EP 834415 décrit des structures : Polyéthylène / liant / EVOH / liant / Polyéthylène.

Le liant est un polyéthylène greffé par de l'anhydride maléique de MFI 0,1 à 3, de densité comprise entre 0,920 et 0,930 et il contient 2 à 40 % en poids d'insolubles dans le n-décane à 90°C. Il est expliqué que le polyéthylène greffé est dissous dans le n-décane à 140°C, on le refroidit à 90°C, des produits précipitent ; puis on le filtre et le taux d'insolubles est le pourcentage en poids qui précipite et est recueilli par filtration à 90°C.

Si le taux est compris entre 2 et 40 % le liant a une bonne résistance à l'essence.

Aucun exemple ne montre un tel polymère. Le texte précise que le liant est en fait un mélange de 2 à 30 parties d'un polyéthylène greffé de densité comprise entre 0,930 et 0,980 et de 70 à 98 parties d'un polyéthylène non greffé de densité comprise entre 0,910 et 0,940 de preference 0,915 et 0,935.

La demanderesse a essayé de préparer des liants et les structures correspondantes en suivant cet enseignement. Elle s'est aperçue que les liants n'étaient pas reproductibles c'est-à-dire que le choix du produit par sa densité n'est pas une indication suffisante. La demanderesse s'est aussi aperçue que ces critères n'étaient pas suffisants pour que le liant résiste à l'essence.

L'invention va maintenant être décrite en détails.

S'agissant du polymère (A1) c'est un polyéthylène homopolymère ou un copolymère de l'éthylène avec un comonomère choisi par exemple parmi :
- les alphaoléfines, avantageusement celles ayant de 3 à 30 atomes de carbone.

Des exemples d'alpha-oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. Ces alpha-oléfines peuvent être utilisées seules ou en mélange de deux ou de plus de deux.
- Les esters d'acides carboxyliques insaturés tels que par exemple les (méth)acrylates d'alkyle dont l'alkyle a de 1 à 24 atomes de carbone.

Des exemples d'acrylate ou méthacrylate d'alkyle utilisables sont notamment le méthacrylate de méthyle, l'acrylate d'éthyle, l'acrylate de n-butyle, l'acrylate d'isobutyle, l'acrylate de 2-éthylhexyle.
- Les esters vinyliques d'acides carboxyliques saturés tels que par exemple l'acétate ou le propionate de vinyle.

Avantageusement (A1) est un polyéthylène haute densité (HDPE) de densité comprise entre 0,940 et 0,965.

Le MFI de (A1) est entre 0,1 et 3 sous 2,16 kg.

Le copolymère (A2) peut être par exemple un élastomère éthylène / propylène (EPR) ou éthylène / propylène / diène (EPDM).

(A2) peut être aussi un polyéthylène de très basse densité (VLDPE) qui est soit un homopolymère de l'éthylène, soit un copolymère de l'éthylène et d'une alpha oléfine.

(A2) peut aussi être un copolymère de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides.

(A2) peut être un polyethylène métallocène.

Les quantités de (A1) et (A2) sont avantageusement 60 à 95 parties de (A1) pour 40 à 5 parties de (A2).

Le mélange de (A1) et (A2) est greffé avec un acide carboxylique insaturé c'est-à-dire (A1) et (A2) sont cogreffés. On ne sortirait pas du cadre de l'invention en utilisant un dérivé fonctionnel de cet acide.

Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique.

Des exemples d'autres monomères de greffage comprennent des esters alkyliques en C₁-C₈ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N,N-diéthylamide maléique, N-monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide ; et des sels métalliques d'acides carboxyliques insaturés tels que acrylate de sodium, méthacrylate de sodium, acrylate de potassium, et méthacrylate de potassium. On préfère l'anhydride maléique.

Divers procédés connus peuvent être utilisés pour greffer un monomère de greffage sur le mélange de (A1) et (A2). Le mélange peut contenir les additifs utilisés habituellement lors la mise en oeuvre des polyoléfines à des teneurs comprises entre 10ppm et 5%, tels que les antioxydants à base de molécules phénoliques substituées les agents de protections UV , les agents de mise en oeuvre tels que les amides gras l'acide stéarique et ses sels, les polymères fluorés connus comme agents pour éviter les défauts d'extrusion , les agents anti- buée à base d'amines, les agents anti-bloquants tels que la silice ou le talc, les mélanges maitres avec colorants, les agents nucleants.

Par exemple, ceci peut être réalisé en chauffant les polymères (A1) et (A2) à température élevée, environ 150° à environ 300°C, en présence ou en l'absence d'un solvant avec ou sans initiateur de radicaux. Des solvants appropriés qui peuvent être utilisés dans cette réaction sont le benzène, toluène, xylène, chlorobenzène, cumène. Des initiateurs de radicaux appropriés qui peuvent être utilisés comprennent le t(butyl-hydroperoxyde, cumène-hydroperoxyde, di-iso-propyl-benzène-hydroperoxyde, di-t-butyl-peroxyde, t-butyl-cumyl-peroxyde, (dicumyl-peroxyde, 1,3-bis-(t-butylperoxy-isopropyl)benzène, acétyl-peroxyde, benzoyl-peroxyde, iso-butyryl-peroxyde, bis-3,5,5-triméthyl-hexanoyl-peroxyde, et méthyl-éthyl-cétone-peroxyde.

Dans le mélange de (A1) et (A2) modifié par greffage obtenu de la façon susmentionnée, la quantité du monomère de greffage peut être choisie d'une façon appropriée mais elle est de préférence de 0,01 à 10 %, mieux de 600 ppm à 6 %, par rapport au poids de (A1) et (A2) greffés.

La quantité du monomère greffé est déterminée par dosage des fonctions succiniques par spectroscopie IRTF.

Le MFI de (A) c'est-à-dire de (A1) et (A2) ayant été cogreffés est 5 à 100 / 21,6 kg. Quant au polyéthylène (B) il s'agit d'un polyéthylène homo ou copolymère.

La densité de (B) est avantageusement comprise entre 0,930 et 0,940.

Le MFI de (B) : 5 à 100 / 21,6 kg.

Selon une forme avantageuse de l'invention le liant comprend 5 à 20 parties de (A) pour 95 à 80 parties de (B).

La densité du mélange (A)+(B) est avantageusement comprise entre 0,930 et 0,940.

La structure multicouche de la présente invention est constituée par la couche comprenant le liant précédent, et par une couche (E) de résine polaire oxygénée ou azotée, ou une couche métallique.

Des exemples de résines polaires préférées dans la couche autre que le liant sont les résines de polyamide, une polycétone aliphatique, un copolymère saponifié d'éthylène et d'acétate de vinyle, et les polyesters.

Plus spécifiquement, elles comprennent des polyamides synthétiques à longue chaîne ayant des motifs structurels du groupe amide dans la chaîne principale, tels que le PA-6, PA-6,6, PA-6,10, PA-11, le PA-6/6,6 et le PA-12 ; un copolymère saponifié d'éthylène et d'acétate de vinyle ayant un degré de saponification d'environ 90 à 100% en moles, obtenu en saponifiant un copolymère éthylène/acétate de vinyle ayant une teneur en éthylène d'environ 15 à environ 60% en moles ; des polyesters tels que le polyéthylène-téréphtalate, le polybutylène-téréphtalate, le polyéthylène naphténate, des mélanges de ces résines, ou encore des polyesters aromatiques comme les cristaux liquides polymères.

La couche métallique peut être par exemple une feuille, une pellicule ou une feuille d'un métal tel que l'aluminium, le fer, le cuivre, l'étain et le nickel, ou un alliage contenant au moins un de ces métaux comme constituant principal. L'épaisseur de la pellicule ou de la feuille peut être convenablement choisie et elle est par exemple d'environ 0,01 à environ 0,2 mm. Il est de pratique courante de dégraisser la surface de la couche métallique avant de laminer sur elle le liant de l'invention. La couche de résine polaire oxygénée ou azotée (E) peut contenir également des additifs connus en quantité classique.

L'invention concerne aussi une structure comprenant respectivement une couche (F) de polyoléfine une couche du liant de l'invention et soit une couche (E) de résine polaire azotée ou oxygénée soit une couche métallique. Selon une autre forme particulière, l'invention concerne une structure comprenant respectivement une couche de PEHD, une couche du liant de l'invention, une couche d'EVOH(ou d'un alliage d'EVOH) ou une couche de polyamide(ou à base de polyamide), une couche du liant de l'invention et une couche de PEHD. Avantageusement elle se présente sous forme de corps creux rigides de volume 0,1 à 200 litres. L'épaisseur totale est comprise entre 0,2 et 20 mm, l'EVOH ou le polyamide représentant 0,5 à 15 % de cette épaisseur, chaque couche de liant 0,2 à 10 %, et les deux couches de PEHD le complément.
Le MFI du PEHD est de préférence 3 à 17 g/10 min à 190°C ; 21,6 kg.
Le MFI de l'EVOH est de préférence 1 à 10 g/10 min à 190°C ; 2,16 kg.

Avantageusement la couche extérieure de PEHD peut être remplacée par deux couches, l'une extérieure en PEHD vierge éventuellement colorée, l'autre en produit recyclé provenant des chutes et des découpes lors de l'extrusion soufflage de ces corps creux. L'épaisseur de la couche extérieure de PEHD ajoutée à l'épaisseur de la couche de recyclé est essentiellement la même que dans le cas d'une seule couche extérieure de PEHD.

Ces structures sont utiles pour faire des réservoirs d'essence ou des tubulures de remplissage des réservoirs d'essence.

Les différentes couches des structures de l'invention peuvent contenir des additifs tels que des charges, des stabilisants, des agents glissants, des agents antistatiques, des ignifugeants.

Les structures de l'invention peuvent être fabriquées par des procédés connus de coextrusion, d'extrusion soufflage, de la technique des thermoplastiques.

### Exemples

Les exemples présentés correspondent à des structures 5 couches issues de flacons réalisés par extrusion soufflage dans les conditions suivantes.

### Structure du flacon

- 3 constituants, 5 couches
- PEHD / liant / EVOH ou PA / liant / PEHD
- Epaisseurs : 1,2/0,1/0,15(EVOH) à 0,25(PA) / 0,1 /1,2 mm
- PEHD : densité = 0,945 - 0,950 MFI = 5 - 6 g/10 min (190°C, 21.6 kg)
- EVOH : taux d'éthylène = 29 % MFI = 1,7 g/10 min (190°C, 2.16 kg)
- POLYAMIDE :copolyamide 6/6-6 tel que l'ULTRAMID C4FN de la société BASF.

### Type de flacon

Cylindrique (0 = 70 mm) avec 2 faces planes, 0,7 litre, hauteur = 270 mm, poids = 170 g

### Conditions d'extrusion souffage

| Profils de température (°C) : | | | | | | |
|---|---|---|---|---|---|---|
| | | | | | | Tête |
| PEHD | 200 | 210 | 220 | 230 | 230 | 230 |
| Liant | 210 | 220 | 220 | 220 | 220 | 230 |
| EVOH | 180 | 190 | 200 | 210 | 220 | 230 |

| | |
|---|---|
| Outillage | Diamètre de la filière = 20 mm |
| | Diamètre du poinçon = 12 mm |
| | Entrefer = 4 mm |

Taux d'étirement par soufflage : environ 3

### Mesure de la résistance au pelage entre couches

- Eprouvettes de 15 x 150 mm découpées dans les parties planes du flacon et conditionnées au moins 24 heures à 23°C, 50 % H.R.
- Amorçage au cutter à l'une des interfaces entre liant et EVOH ou entre liant et polyamide.
- Pelage « en T » à une vitesse de traverse de 50 mm/min. La résistance au pelage, exprimée en N/cm, est donnée par la valeur au plateau de la force de pelage, en excluant le pic de démarrage. "AM" signifie l'anhydride maleique, le % poids du mélange cogreffé (A) désigne la proportion du mélange A dans A+B.

| Formulations | | Exemple 1 | Exemple 2 | Exemple 3 |
|---|---|---|---|---|
| Polymère A1 | Densité (g/cm3) | 0,958 | 0,940 | 0,950 |
| | MFI (g/10min; 2,16kg) | 0,9 | 1 | 1 |
| | % en poids | 80 | 75 | 90 |
| Polymère A2 | Comonomère | propylène | 1-octène | propylène |
| | Densité (g/cm3) | 0,880 | 0,870 | 0,880 |
| | MFI (g/10min; 2,16kg) | 0,2 | 5 | 0,2 |
| | % en poids | 20 | 25 | 10 |
| Mélange cogreffé A | Taux d'AM (ppm) | 4000 | 10000 | 6000 |
| | % en poids | 20 | 25 | 10 |
| Polymère B | Densité (g/cm3) | 0,934 | 0,938 | 0,936 |
| | MFI (g/10min ; 21,6kg) | 14 | 20 | 18 |
| Mélange A + B | Densité (g/cm3) | 0,936 | 0,934 | 0,937 |
| | MFI (g/10min ; 21,6kg) | 15 | 18 | 18 |
| | Taux d'AM (ppm) | 800 | 2500 | 600 |
| Résistance au pelage | Sur PA 6/66 (N/cm) Sur EVOH | 70 50 | 80 55 | 75 55 |

## Revendications

1. Liant de coextrusion comprenant :
- 5 à 30 parties d'un polymère (A) lui-même comprenant un mélange d'un polyéthylène (A1)homopolymère ou copolymère de densité comprise entre 0,935 et 0,980 et d'un polymère (A2) choisi parmi les élastomères, les polyéthylènes de très basse densité, les copolymères de l'éthylène,
ou le polyéthylène métallocène, le mélange (A1) + (A2) étant cogreffé par un acide carboxylique insaturé, ou un dérivé fonctionnel de cet acide
- 95 à 70 parties d'un polyéthylène (B) de densité comprise entre 0,930 et 0,950,
- le mélange de (A) et (B) étant tel que :
. sa densité est comprise entre 0,930 et 0,950,
. la teneur en acide carboxylique insaturé greffé est comprise entre 30 et 10000 ppm,
. le MFI (indice d'écoulement à l'état fondu) mesuré selon ASTM D 1238 à 190°C-21,6 kg est compris entre 5 et 100.

2. Liant selon la revendication 1 dans lequel la densité de (A)+(B) est comprise entre 0,930 et 0,940.

3. Structure multicouche comprenant une couche comprenant le liant de l'une quelconque des revendications précédentes, et directement attachée à celle-ci une couche (E) de résine polaire azotée ou oxygénée telle qu'une couche de résine polyamide, d'une polycétone aliphatique, d'un copolymère saponifié d'éthylène et d'acétate de vinyle (EVOH) ou d'une résine polyester, ou bien une couche métallique.

4. Structure selon la revendication 3 dans laquelle est directement attachée, du côté du liant, soit une couche (F) de polyoléfine, soit une couche d'une résine choisie parmi les résines de la couche (E) soit une couche métallique.

5. Structure selon la revendication 4 comprenant respectivement une couche de PEHD, une couche du liant de l'invention, soit une couche d'EVOH ou d'un alliage d'EVOH, soit une couche de polyamide ou à base de polyamide, une couche du liant de l'invention et une couche de PEHD.

6. Corps creux rigides constitués d'une structure selon l'une quelconque des revendications 3 à 5.

7. Réservoir d'essence comprenant une structure selon la revendication 5.

## Claims

1. Coextrusion tie comprising:
- 5 to 30 parts of a polymer (A), itself comprising a blend of a polyethylene (A1), this being either a homopolymer or a copolymer of density between 0.935 and 0.980, and of a polymer (A2) chosen from elastomers, very low-density polyethylenes, ethylene copolymers or metallocene polyethylene, the (A1)/(A2) blend being cografted with an unsaturated carboxylic acid or a functional derivative of this acid;
- 95 to 70 parts of a polyethylene (B) of density between 0.930 and 0.950;
- the blend of (A) and (B) being such that:
. its density is between 0.930 and 0.950,
. the content of grafted unsaturated carboxylic acid is between 30 and 10,000 ppm,
. the MFI (melt flow index) measured according to ASTM D 1238 at 190°C/2.16 kg is between 5 and 100.

2. Tie according to Claim 1, in which the density of (A)/(B) is between 0.930 and 0.940.

3. Multilayer structure comprising a layer comprising the tie of any one of the preceding claims and, directly attached to the latter, a layer (E) of nitrogen-containing or oxygen-containing polar resin, such as a layer of polyamide resin, of an aliphatic polyketone, of a saponified ethylene-vinyl acetate copolymer (EVOH) or of a polyester resin, or else a metal layer.

4. Structure according to Claim 3, in which either a polyolefin layer (F) or a layer of a resin chosen from the resins of the layer (E) or a metal layer is directly attached on the tie side.

5. Structure according to Claim 4, respectively comprising an HDPE layer, a layer of the tie of the invention, either a layer of EVOH or of an EVOH alloy, or a polyamide or polyamide-based layer, a layer of the tie of the invention and an HDPE layer.

6. Rigid hollow bodies consisting of a structure according to any one of Claims 3 to 5.

7. Petrol tank comprising a structure according to Claim 5.

## Patentansprüche

1. Coextrusionsbindemittel, umfassend:
- 5 bis 30 Teile eines Polymers (A), das selbst ein Gemisch aus einem Polyethylen (A1), Homopolymer oder Copolymer mit einer Dichte zwischen 0,935 und 0,980 und einem Polymer (A2) umfasst, das aus Elastomeren, Polyethylenen sehr niedriger Dichte, Ethylen-Copolymeren oder Metallocen-Polyethylen ausgewählt ist, wobei das Gemisch (A1) + (A2) durch eine ungesättigte Carbonsäure oder einen funktionellen Abkömmling dieser Säure aufgepfropft ist
- 95 bis 70 Teile eines Polyethylens (B) mit einer Dichte zwischen 0,930 und 0,950,
- wobei das Gemisch aus (A) und (B) derart ist, dass:
• seine Dichte zwischen 0,930 und 0,950 liegt,
• der Gehalt an ungesättigter aufgepfropfter Carbonsäure zwischen 30 und 10000 ppm liegt,
• der MFI (Schmelzindex), gemessen nach ASTM D 1238 bei 190 °C - 21,6 kg, zwischen 5 und 100 liegt.

2. Bindemittel nach Anspruch 1, wobei die Dichte von (A)+(B) zwischen 0,930 und 0,940 liegt.

3. Multischichtstruktur, die eine Schicht umfasst, die das Bindemittel nach einem der vorhergehenden Ansprüche umfasst, und unmittelbar daran befestigt eine Schicht (E) aus einem polaren stickstoffhaltigen oder sauerstoffhaltigen Harz wie eine Schicht aus einem Polyamidharz, einem aliphatischen Polyketon, einem verseiften Ethylen-Vinylacetat-Copolymer (EVOH) oder einem Polyesterharz oder auch eine Metallschicht.

4. Struktur nach Anspruch 3, wobei auf der Seite des Bindemittels entweder eine Schicht (F) aus einem Polyolefin oder eine Schicht aus einem Harz, das aus den Harzen der Schicht (E) ausgewählt ist, oder eine Metallschicht unmittelbar befestigt ist.

5. Struktur nach Anspruch 4, die jeweils eine Schicht aus HDPE, eine Schicht aus dem Bindemittel der Erfindung, entweder eine Schicht aus EVOH oder aus einer EVOH-Mischung oder eine Schicht aus einem Polyamid oder auf Grundlage eines Polyamids, eine Schicht aus dem Bindemittel der Erfindung und eine Schicht aus HDPE umfasst.

6. Hohle steife Körper, die aus einer Struktur nach einem der Ansprüche 3 bis 5 bestehen.

7. Benzinbehälter, der eine Struktur nach Anspruch 5 aufweist.
